# EUROPÄISCHE PATENTANMELDUNG

(11) **EP 0 678 646 A1**
(43) Veröffentlichungstag der Anmeldung: **25.10.1995**
(21) Anmeldenummer: 95104272.0
(22) Anmeldetag: 23.03.1995
(51) Int. Cl.: E06B 9/11, E06B 9/17

(54) **Vorrichtung zur Erfassung der Drehbewegung eines Zahn- oder Nockenrads**

(30) Priorität: 23.04.1994 DE 4414280
(71) Anmelder: ROBERT BOSCH GMBH, 70442 Stuttgart (DE)
(72) Erfinder: Meyer-Staufenbiel, Torsten, D-71254 Ditzingen (DE); Frei, Martin, D-71665 Vaihingen/Enzen (DE); Helmi, Hussam, Dipl.-Ing., D-71672 Marbach (DE); Straeter, Michael, Dipl.-Ing., D-70825 Korntal-Münchingen (DE); Sorg, Dieter, Dipl.-Ing., D-75050 Gemmingen (DE)

(57) **Zusammenfassung**

Die Erfindung betrifft eine Vorrichtung zur Erfassung der Drehbewegung eines Zahnrads (10), insbesondere zur Erfassung der Position eines Rolladenpanzers bei einem elektrischen Rolladenantrieb. Das Zahnrad (10) besteht wenigstens im Bereich der Zähne aus ferromagnetischem Material. An diesem Zahnrad (10) ist ein Hall-Element (22) angeordnet, das an seiner vom Zahnrad (10) wegweisenden Seite mit einem Permanentmagneten (19) versehen ist. Jeweils beim Passieren eines Zahns wird im Hall-Element ein elektrisches Signal erzeugt, das einer Auswerteeinrichtung zugeführt wird. Hierdurch können Positionen und Drehzahl verschleißfrei und geräuscharm auf kostengünstige Weise erfaßt werden.

## Beschreibung

Die Erfindung betrifft eine Vorrichtung zur Erfassung der Drehbewegung eines Zahn - oder Nockenrads, insbesondere zur Erfassung der Position eines Rolladenpanzers bei einem elektrischen Rolladenantrieb, nach der Gattung des Anspruchs 1.

### STAND DER TECHNIK

Bei einem bekannten, von der Anmelderin unter der Bezeichnung Roll-Lift vertriebenen Rolladenantrieb wird ein Nockenrad über Zahnräder vom Antriebsmotor für den Rollladengurt angetrieben. Der Nocken des Nockenrads betätigt dadurch bei der Bewegung des Rolladengurts wiederholt einen Mikroschalter, dessen Signale in einer Zähleinrichtung gezählt werden. Da die Signale entsprechend der Drehrichtung des Elektromotors in entgegengesetzten Zählrichtungen gezählt werden, ist der Zählerstand ein Maß für die Position des Rolladengurts und damit des Rolladenpanzers, so daß dessen Endstellungen über entsprechende Zahlenvorgaben eingestellt werden können. Der Nachteil der bekannten Anordnung besteht darin, daß die mechanische Betätigung des Mikroschalters nach längerer Zeit zu Verschleißerscheinungen führt, die Störungen der Positionserfassung nach sich ziehen können. Darüber hinaus verursacht die Betätigung des Mikroschalters unerwünschte Geräusche.

### VORTEILE DER ERFINDUNG

Die erfindungsgemäße Vorrichtung mit den kennzeichnenden Merkmalen des Anspruchs 1 hat demgegenüber den Vorteil, daß ein zusätzliches Antriebsrad, wie ein Nockenrad, zur Positionserfassung vollständig entfallen kann, und daß ein ohnehin vorhandenes Antriebszahnrad zur Positionserfassung eingesetzt werden kann. Hierdurch verringern sich die Kosten, und es sind kleinere Baugrößen möglich. Das berührungslose Meßverfahren mittels des Hall-Elements ist verschleißfrei und geräuschlos. Darüber hinaus ermöglicht ein Zahnrad gegenüber einem Nockenrad eine wesentlich höhere Auflösung und damit genauere Einstellung der Endpositionen. Wird das Zahnrad in Verbindung mit dem Hall-Element zur Drehzahlerfassung eingesetzt, so kann auch diese präziser durchgeführt werden.

Durch die in den Unteransprüchen aufgeführten Maßnahmen sind vorteilhafte Weiterbildungen und Verbesserungen der im Anspruch 1 angegebenen Vorrichtung möglich.

Das Hall-Element ist in vorteilhafter Weise als Differenz-Hall-Element mit zwei Sensorbereichen ausgebildet, deren Abstand einem ungeradzahligen Vielfachen des halben Abstands zwischen zwei Zähnen entspricht. Dadurch wird immer ein Sensorbereich von konzentrierten Feldlinien beaufschlagt, während beim anderen Sensorbereich die Feldlinien die geringste Konzentration aufweisen, so daß ein Ausgangssignal mit gutem Störabstand und guter Amplitude mit Hilfe eines Differenzverstärkers erreicht werden kann.

Zur rationellen Fertigung bei geringster Platzbeanspruchung ist der Permanentmagnet in einer Leiterplatte eingelassen und vorzugsweise so angeordnet, daß er auf der Bestückungsseite der Leiterplatte bündig mit der Oberfläche abschließt. Das Hall-Element kann dadurch mit einem üblichen Bestückungsautomaten bestückt werden, der auch zur Bestückung der Leiterplatte mit weiteren elektrischen Bauelementen und/oder Komponenten vorgesehen ist, die die Steuervorrichtung und/oder die Auswertevorrichtung bilden können.

Zur Befestigung ist der Permanentmagnet zweckmäßigerweise in eine Durchgangsöffnung der Leiterplatte eingeklebt, wozu sich zur schnellen Fixierung ein UV-härtbarer Klebstoff eignet.

Bei der Bestückung wird das Hall-Element auf den Permanentmagneten aufgeklebt, und seine elektrischen Anschlüsse werden mit Leiterbahnen der Leiterplatte nach einem Lötprozeß zusammen mit anderen Bauelementen und/oder Komponenten verlötet. Hierdurch kann auf zusätzliche Arbeitsschritte für die elektrische und mechanische Anordnung des Hall-Elements verzichtet werden.

Der Abstand zwischen dem Zahnrad und dem Hall-Element beträgt vorzugsweise 0,5 bis 1,5 mm, wobei dieser Abstand beispielsweise durch Justieren der Leiterplatte eingestellt werden kann.

### ZEICHNUNG

Ausführungsbeispiele der Erfindung sind in der Zeichnung dargestellt und in der nachfolgenden Beschreibung näher erläutert. Es zeigen:
- Fig. 1: eine schematische Darstellung eines Antriebszahnrads in Verbindung mit einem Hall-Element,
- Fig. 2: eine vergrößerte Darstellung eines Differenz-Hall-Elements, das mit einem teilweise dargestellten Zahnrad zusammenwirkt, sowie eine Auswerteschaltung für die Signale des Differenz-Hall-Elements und
- Fig. 3: ein an einer Leiterplatte angeordnetes Hall-Element.

### BESCHREIBUNG DER AUSFÜHRUNGSBEISPIELE

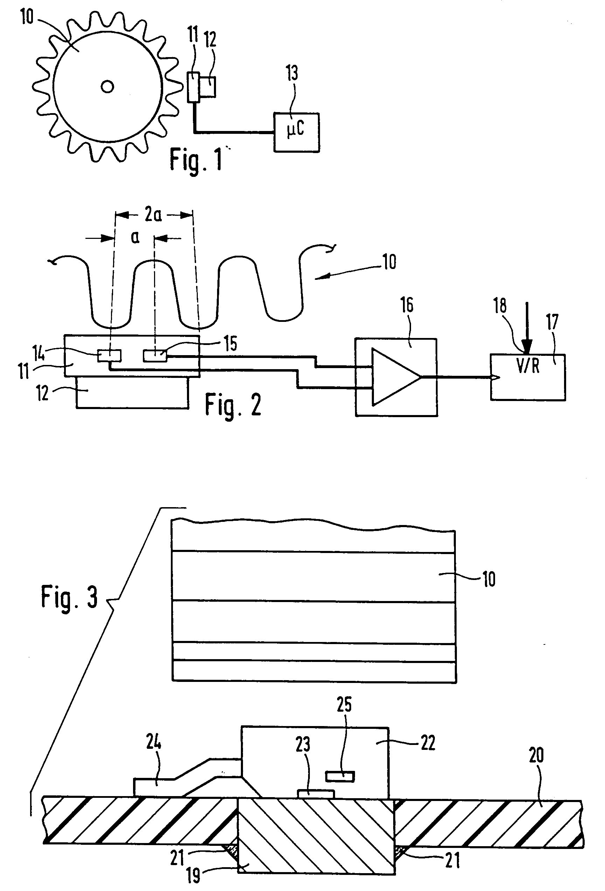

Bei dem in Fig. 1 dargestellten Antriebszahnrad 10 handelt es sich beispielsweise um ein Antriebszahnrad zwischen einem nicht dargestellten Elektromotor und einer ebenfalls nicht dargestellten, von diesem Elektromotor angetriebenen Gurtaufwickelrolle eines Rolladenantriebs. Es kann sich bei diesem Antriebszahnrad jedoch auch um ein Antriebszahnrad zum Antrieb einer anderen Verdunkelungsvorrichtung, wie einer Markise, eines Rollos, eines Lamellenvorhangs, eines Klappladens od.dgl., handeln. Weiterhin kann ein solches Antriebszahnrad auch in einem Garagentorantrieb, einer Hebevorrichtung od.dgl. angeordnet sein. Wesentlich dabei ist, daß bei dieser das Antriebszahnrad enthaltenden Vorrichtung Antriebs-Endpositionen und/oder Drehzahlen erfaßt werden sollen.

In geringem Abstand zum Antriebszahnrad 10, das wenigstens im Zahnbereich aus ferromagnetischem Material besteht oder mit solchem beschichtet ist, befindet sich ein Hall-Element 11 (Hall-Sensor), das an seiner vom Antriebszahnrad 10 wegweisenden Seite mit einem Permanentmagneten 12 versehen ist. Das Hall-Element 11 ist mit einem Mikrorechner 13 als Auswerteeinrichtung verbunden, der selbstverständlich auch als diskrete Auswerteschaltung ausgebildet sein kann.

Das Hall-Element 11 gibt jeweils ein elektrisches Signal ab, wenn eine Zahnflanke des Antriebszahnrads 10 an der Sensorfläche vorbeibewegt wird. Das homogene Feld des Permanentmagneten 12 durchflutet dabei die Sensorbereiche des Hall-Elements 11. Die Impulse werden im Mikrorechner 13 gezählt, wobei die Zählrichtung durch die Antriebsrichtung des nicht dargestellten Antriebsmotors in an sich bekannter Weise vorgewählt wird. Zwei vorgebbare Zahlenwerte geben dabei die beiden Endpositionen für die Bewegung vor, wobei diese Endpositionen durch Veränderung der Zahlenwerte verändert werden können. Weiterhin ist es möglich, die Zahl der erzeugten Signale pro Zeiteinheit zu erfassen und damit die Drehzahl des Antriebszahnrads oder der damit in Wirkverbindung stehenden Vorrichtung zu ermitteln.

In Fig. 2 sind das als Differenz-Hall-Element ausgebildete Hall-Element sowie ein Teilbereich des Antriebszahnrads 10 vergrößert dargestellt. Das Hall-Element 11 besitzt zwei Sensorbereiche 14, 15, die mit einem Differenzverstärker 16 verbunden sind. Der Ausgang des Differenzverstärkers 16 ist mit dem Zähleingang einer Zähleinrichtung 17 verbunden, die einen Steuereingang 18 für die Festlegung der Zählrichtung (V/R) aufweist. Die Funktion dieser Zähleinrichtung 17 kann selbstverständlich durch den Mikrorechner 13 realisiert sein.

Der Abstand a zwischen den beiden Sensorbereichen 14, 15 entspricht dem halben Abstand zwischen zwei Zähnen, also dem Abstand zwischen einem Zahn und der Mitte einer Zahnlücke des Antriebszahnrads 10, so daß immer ein Sensorbereich (14) im Bereich konzentrierter Feldlinien liegt (ein Zahn befindet sich genau über dem Sensorbereich 14) und der andere Sensorbereich (15) in einem Bereich geringster Feldlinienkonzentration liegt. Dies kann beispielsweise auch dadurch erreicht werden, daß der Abstand zwischen den beiden Sensorbereichen einem ungeradzahligen Vielfachen des halben Abstands zwischen zwei Zähnen entspricht.

Die jeweils erzeugten Signale werden im Differenzverstärker 16 verstärkt, um einen guten Störabstand bei hoher Signalamplitude zu erreichen. Die beim Passieren jedes Zahns erzeugten Ausgangssignale des Differenzverstärkers 16 werden in der Zähleinrichtung 17 entsprechend der Drehrichtung des Antriebszahnrads aufwärts- oder abwärtsgezählt, so daß der Zählerstand jeweils ein Maß für die Position der vom Antriebszahnrad 10 angetriebenen Einrichtung darstellt.

Bei dem in Fig. 3 dargestellten weiteren Ausführungsbeispiel ist ein Permanentmagnet 19 in eine Durchgangsöffnung einer Leiterplatte 20 so eingeklebt, daß er auf der Bestückungsseite der Leiterplatte 20 bündig mit deren Oberfläche abschließt. Zur Verbindung dient ein UV-aushärtbarer Klebstoff 21, um den Permanentmagneten 19 in einer sehr kurzen Zeit von einigen Sekunden in der Leiterplatte 20 fixieren zu können. Der Permanentmagnet 19 muß die Temperatur einer Lötwelle bzw. eines Reflow-Ofens schadlos überstehen können. Als Magnetwerkstoff eignet sich daher beispielsweise SM 2 CO 17.

Nach der Fixierung des Permanentmagneten 2 wird ein SMD-Hall-IC als Hall-Element 22 auf der Bestückungsseite der Leiterplatte 20 mittels eines handelsüblichen SMD-Bestückungsautomaten auf dem Permanentmagneten 19 bestückt, das heißt aufgeklebt. Als Klebstoff dient beispielsweise eine Epoxid-Klebstoff, wobei eine entsprechende Klebestelle an der zum Permanentmagneten 19 hinweisenden Seite des Hall-Elements 22 eingelassen ist. Diese Klebestelle 23 kann selbstverständlich auch im Permanentmagneten 19 eingelassen sein oder sich nur flächig zwischen diesen beiden Bauteilen befinden. Während des Bestückungsvorgangs werden auch gleichzeitig weitere, nicht dargestellte elektrische Bauelemente und/oder Komponenten auf die Leiterplatte 20 aufgebracht, die beispielsweise den Differenzverstärker 16 und die übrigen Auswerteschaltung oder Steuerschaltung bilden können. Ein seitlich vom Hall-Element 22 abstehender Lötanschluß 24 wird anschließend zusammen mit entsprechenden Lötkontakten der übrigen Bauelemente mit Leiterbahnen der Leiterplatte 20 verlötet. Ein oder mehrere Sensorbereiche 25 befinden sich geschützt im Gehäuse des Hall-Elements 22.

Bei der Montage wird die Leiterplatte 20 so gegenüber dem Antriebszahnrad 10 positioniert, daß beispielsweise ein Luftspalt von 0,5 bis 1,5 mm zwischen dem Hall-Element 22 und dem Antriebszahnrad 10 gebildet wird. Der Permanentmagnet hat beispielsweise einen Durchmesser von 5 mm und eine Höhe von 2 mm.

Das Hall-Element 22 kann als einfaches Hall-Element oder als Differenz-Hall-Element gemäß Fig. 2 ausgebildet sein.

## Patentansprüche

1. Vorrichtung zur Erfassung der Drehbewegung eines Zahn- oder Nockenrads, insbesondere zur Erfassung der Position eines Rolladenpanzers bei einem elektrischen Rolladenantrieb, mit einer am Zahn- oder Nockenrad angeordneten und jeweils beim Passieren eines Zahns oder Nockens ein elektrisches Signal erzeugenden Sensoreinrichtung und mit einer die erzeugten Signale erfassenden Auswerteeinrichtung, dadurch gekennzeichnet, daß das Zahnrad (10) wenigstens im Bereich der Zähne aus ferromagnetischem Material besteht und daß die Sensoreinrichtung als Hall-Element (11; 22) ausgebildet ist, das an seiner vom Zahnrad (10) wegweisenden Seite mit einem Permanentmagneten (12; 19) versehen ist.

2. Vorrichtung nach Anspruch 1, dadurch gekennzeichnet, daß das Hall-Element (11; 22) als Differenz-Hall-Element mit zwei Sensorbereichen (14, 15) ausgebildet ist, deren Abstand einem ungeradzahligen Vielfachen des halben Abstandes (a) zwischen zwei Zähnen entspricht.

3. Vorrichtung nach Anspruch 2, dadurch gekennzeichnet, daß die Ausgänge der beiden Sensorbereiche (14, 15) mit einem Differenzverstärker (16) verbunden sind.

4. Vorrichtung nach einem der vorhergehenden Ansprüche, dadurch gekennzeichnet, daß das Hall-Element (11; 22) mit einer Zähleinrichtung (17) verbunden ist, durch die die erzeugten Signale in Abhängigkeit der Drehrichtung des Zahnrads (10) vorwärts oder rückwärts zählbar sind.

5. Vorrichtung nach einem der vorhergehenden Ansprüche, dadurch gekennzeichnet, daß Mittel zur Bildung eines Drehzahlwerts aus der Zahl der erfaßten Signale pro Zeiteinheit vorgesehen sind.

6. Vorrichtung nach einem der vorhergehenden Ansprüche, dadurch gekennzeichnet, daß der Permanentmagnet (19) in eine Leiterplatte (20) eingelassen ist.

7. Vorrichtung nach Anspruch 6, dadurch gekennzeichnet, daß der Permanentmagnet (19) auf der Bestückungsseite der Leiterplatte (20) bündig mit deren Oberfläche angeordnet ist.

8. Vorrichtung nach Anspruch 6 oder 7, dadurch gekennzeichnet, daß der Permanentmagnet (19) in eine Durchgangsöffnung der Leiterplatte (20) eingeklebt ist, insbesondere mittels eines UV-härtbaren Klebstoffes (21).

9. Vorrichtung nach einem der Ansprüche 6 bis 8, dadurch gekennzeichnet, daß das Hall-Element (22) zur Bestückung durch einen Bestückungsautomaten ausgebildet ist, der zur Bestückung der Leiterplatte (20) mit weiteren elektrischen Bauelementen und/oder Komponenten vorgesehen ist.

10. Vorrichtung nach Anspruch 9, dadurch gekennzeichnet, daß das Hall-Element (22) auf dem Permanentmagnet (19) aufgeklebt ist und seine elektrischen Anschlüsse (24) mit Leiterbahnen der Leiterplatte (20) durch einen Lötprozeß zusammen mit den anderen Bauelementen und/oder Komponenten verlötet sind.

11. Vorrichtung nach einem der vorhergehenden Ansprüche, dadurch gekennzeichnet, daß der Abstand zwischen dem Zahnrad (10) und dem Hall-Element (11; 22) im wesentlichen 0,5 bis 1,5 mm beträgt.

12. Vorrichtung nach einem der vorhergehenden Ansprüche, dadurch gekennzeichnet, daß das Zahnrad (10) als ohnehin vorhandenes Antriebszahnrad ausgebildet ist.

13. Vorrichtung nach Anspruch 12, dadurch gekennzeichnet, daß das Zahnrad als Antriebszahnrad eines elektromotorischen Antriebs zur Steuerung einer Verdunkelungs- oder Schließvorrichtung (z. B. Rolladen, Markise, Rollo, Lamellenvorhang, Klappladen, Garagentor, Hubvorrichtung) oder als damit antriebsmäßig verbundenes Zahnrad ausgebildet ist.

14. Vorrichtung nach Anspruch 13, dadurch gekennzeichnet, daß der elektromotorische Antrieb als Antrieb eines Rollladengurts ausgebildet ist.
